# EUROPEAN PATENT APPLICATION

(11) **EP 4 415 312 A1**
(43) Date of publication of application: **14.08.2024**
(21) Application number: 23155296.9
(22) Date of filing: 07.02.2023
(51) Int. Cl.: H04L 9/40, G06F 21/55, H04L 67/12, H04W 4/70, H04L 9/00

(54) **A SECURE BLOCKCHAIN-BASED ARCHITECTURE FOR ENABLING COLLECTIVE INTELLIGENCE IN DISTRIBUTED IOT NETWORKS**

(71) Applicant: Fibabanka Anonim Sirketi, 34394 Istanbul (TR); University Of Jyväskylä, 40014 Jyväskylä (FI)
(72) Inventor: SAFAK, ILGIN, 06810 ANKARA (TR); FRANTTI, TAPIO, 90580 Oulu (FI)
(74) Representative: Yamankaradeniz, Kemal

(57) **Abstract**

The present invention is a secure blockchain-based architecture for enabling collective intelligence in distributed loT networks and allowing real-time decision-making. In this architecture, various security related functionalities are distributed to network nodes to detect tampered, captured and injected devices, recognize their movements and prevent networks use as an attack surface. Nodes interact with signaling and data traffic but also with Al traffic and the blockchain to transfer security information to each node. The blockchain network allows for the authentication and governance of loT devices in a distributed, zero-trust environment in real-time. Al signaling helps distribute cybersecurity functionalities across the loT network based on the device and/or application type by supporting the data transmission of network and device information suitable for all loT devices.

## Description

### Technical Field

The present invention is a secure blockchain-based architecture for enabling collective intelligence in distributed loT networks.

### Background

The Internet of Things (IoT) is one of the most important technologies of the century enabling data collection, data exchange, communication and control actions between people, processes, and things. We can connect to the Internet and thus control industrial and everyday objects, such as production devices and actuators, household appliances, light bulbs, fitness trackers, baby monitors, vacuum cleaners, and lawn movers. According to forecasts, the use of loT devices will continue to increase with time. For example, loT Analytics counts number of loT devices to be 16.4 billion units in 2022 and to exceed 30.9 billion units in year 2025, loT (2022). Cisco estimates 500 billion devices to be connected to the internet by 2030, Cis (2022). Statista forecasts that end-user spending on loT solutions worldwide in 2025 will be 1567 billion US$, Sta (2022). However, the number of security threats targeting loT devices and the occurrence of cyber security incidents have also increased due to the wide penetration of loT across the entire spectrum of daily activities and the widespread use of critical infrastructures. The susceptibility to cyber threats is a serious concern for loT networks and overlaid complex systems that are inexorably linked to the economic and security interests of the systems' actors. The dependence of loT systems on technical and economic success forces the loT actors to take action against hostile cyber actions and attacks. Adversaries may penetrate networks, disrupt, or defeat the system defense using exploits available on the Internet, hang on systems for a long time, and utilize data available on the systems. Therefore, the growth of loT usage will increase the need of new cyber security solutions for the loT networks.

The proliferation of the Internet of Things (IoT) has fundamentally changed how different application environments are being used. IoT networks are prone to malicious attacks similar to other networks. Additionally, physical tampering, injection and capturing of the nodes is more probable in loT networks. Therefore, conventional security practices require substantial re-engineering for constrained loT networks.

Artificial intelligence could be used in enabling loT network devices to become smarter and ensure the loT network's security autonomously. Al-based loT applications are capable of continually learning, interacting, and enhancing real-time cognition capabilities of devices to support processing at end-devices, also known as edge devices, e.g., smartphones, sensor nodes, microcontrollers, and gateways. Self-awareness of loT devices via edge AI can enhance network security, reduce latency, and maintain privacy.

IoT edge networks do not yet formalize and exploit collective intelligence (CI), a subset of self-awareness. CI encompasses task distribution, load balancing, code offloading, as well as instructing how and where to run Cl on edge devices. However, there are several significant challenges that must be addressed in Cl. These include the quality of loT data, the CI mathematical model, the distribution of the computational workload and functionalities, the location of the runtime, and the scalability and portability of the solution. Approximately 30-40% of the data that reaches the cloud is unusable due to the high cost of transmission and computation. Furthermore, there can be significant data loss at the cloud end, ranging from 40 to 45% in some instances Mohamudally (2022).

Another critical cyber-security concern is related to the deployment of large-scale loT systems. The centralized architecture of existing loT systems have weaknesses such as single point of failure, security, privacy, transparency, and data integrity, which prevent further improvements in the loT applications. Additionally, due to the massive number of devices that can belong to several users, the loT systems need to ensure data ownership of users, so that they can exercise complete control over the data they want to share with others.

The coexistence and collaboration of different technologies and the open standards and protocols employed by the loT may pose additional security risks. Despite the heterogeneity and inherent computational power constraints of the loT devices and large scale of the loT network, there is an increasing interest in autonomic computing for device management, where each device is allowed to make significant decisions without the consent of others. In this case, sensors and devices need to communicate with each other in a distributed way. This in turn leads to many design challenges associated with the deployment of loT devices; these include limited scalability and high latency due to a distributed network architecture and limitations related to secure transmission of private and confidential information. These challenges can be addressed by a secure and supervised distributed architecture where the security platform intelligently divides processing load among the nodes of the network. For this purpose, distributed ledger technology (DLT), such as blockchain, may be utilized. Blockchain provides advantages including decentralization, transparency, immutability, enhanced security, anonymity, cost reduction and autonomy, Khan and Salah (2018). DLT transactions are validated using trust-free consensus algorithms that allow every node to participate in the consensus, which increases the robustness and reliability of transactions compared to absolute consensus methods used in centralized methods. Usage of DLT in loT networks eliminates the need of a single trusted authority, thereby enhancing the potential for scalability and reliability.

There are Al-based distributed loT security solutions available in the literature, as provided below.

Mohamudally (2022) provides a comparative study of mathematical models for CI and a discussion of their suitability for implementation on mobile devices. Additionally, a framework for modeling CI systems using graph theory and artificial neural networks is proposed. However, the authors do not study the usage of blockchain technology, AI signaling or the distribution of intelligence in the proposed cognitive system.

Radanliev et al. (2020) propose a dynamic and self-adaptive cyber risk analytics system using AI/ML as well as real-time intelligence. The usage of edge computing nodes and AI/ML technology migrated to the periphery of the internet, along with local loT networks, enables a comprehensive and systematic understanding of the opportunities and threats. However, the authors do not study the usage of blockchain technology, AI signaling or the distribution of intelligence in the proposed cognitive system.

Joseph et al. (2019) proposes a self-organizing loT system architecture that relies on blockchain and its related features in order to achieve aspects of end-to-end loT security. However, the authors do not use AI signaling or provide a mechanism for the distribution of intelligence in their proposed system.

Konstantinos et al. (2019) propose a design method and cognitive platform that incorporate various technologies including Public Key Infrastructure (PKI), blockchain, and AI to support a unified and integrated approach towards data privacy, security and safety of Industrial loT systems. The proposed system analyzes the loT topology and signal metadata in relation to the relevant safety profiles. The aim is to exploit the cyber-physical representation of the system-of-systems in conjunction with security and safety policies to provide real-time risk mapping for static analysis and continuous monitoring to assess safety issues and take appropriate response actions. However, the authors do not study AI signaling or provide a mechanism for the distribution of intelligence in their proposed system.

To overcome the problems of data resource sharing and collective learning in loT, An et al. (2022) propose a novel blockchain- based anomaly detection architecture and method for loT networks. IoT devices with abnormal HTTP traffic are detected efficiently and accurately using the proposed clustering and autoencoder methods. This architecture allows detection models to be shared among users, effectively solving the problem of collective learning. A joint detection of multiple detection methods can also be effective in improving the ability to detect anomalies. However, the authors do not study an AI signaling mechanism or provide a mechanism for the distribution of intelligence besides sharing detection models in their proposed system. Also, only HTTP traffic is studied; loT protocols such as MQQT, CoAP, etc. are not considered.

Li et al. (2022) examines network architectures that may be utilized in future 6G networks to support the intelligent loT. Furthermore, in order to facilitate the sharing of learning and training results in the intelligent loT, the authors introduce and adopt a novel method called collective reinforcement learning (CRL) that is inspired by the collective learning of humans. Blockchain, mobile edge computing and cloud computing are applied to enhance data security and computing efficiency. However, the authors do not study an AI signaling mechanism or provide a mechanism for the distribution of intelligence besides sharing training models in their proposed system.

The US patent USOO8813228B2, "Collective Threat Intelligence Other Publications Gathering System", uses different sources of threat intelligence to collect threat intelligence. In order to identify threats to an information network, threat intelligence information is aggregated, normalized, filtered and scored. Threats are categorized based on their type, maliciousness, and confidence level. A variety of threat feeds are available to network administrators. These feeds include, for example, malicious domains, malicious IP addresses, malicious e-mail addresses, malicious URLs, and malicious software files. However, neither an AI signaling mechanism, nor a mechanism for the distribution of intelligence is provided.

The US patent application U20150373043A1, "Collaborative and Adaptive Threat Intelligence for Computer Security", proposes a collaborative and adaptive threat intelligence approach, where local models are trained with at security data collected from the customer. Based on training results, data is sent to a centralized controller, which performs global training using the received data. As a result of training, result data is received from the centralized controller, which is used to adjust and train local models. Besides the sharing of training results for collaborative threat detection, an AI signaling mechanism supporting distributed user/device blacklisting via anomaly detection and a blockchain network is not supported. Additionally, the mitigation of detected security threats, or disaster recovery is also not provided.

In the international patent application WO2017018926A1, "System and Method for High Speed Threat Intelligence Management Using Unsupervised Machine Learning and Prioritization Algorithms", a system for consolidating threat intelligence data for a computer system and related networks is described. Various sources of raw threat intelligence data are collected and partitioned into a common format for cluster analysis, which is performed using unsupervised machine learning algorithms. An asset-based threat severity level correlation process is then conducted on the organized threat intelligence data. This process is based on the critical consolidation parameters of the intermediate network vulnerabilities of a particular computer network. Upon completion of this high-speed automated process, the final processed intelligence data is formatted into predefined formats for transmission to third parties. However, an AI signaling method, or a mechanism for the distribution of intelligence in the network is not provided.

The US patent application US20170214701 A1, "Computer Security Based on Artificial Intelligence", describes an end-to-end AI based security system including threat detection, information management, code obfuscation, and infrastructure protection. However, an AI signaling method, or an intelligence distribution mechanism is not provided.

The international patent application WO2012164336A1, "Distribution and Processing of Cyber Threat Intelligence Data in a Communications Network", describes a method for generating a cyber-threat intelligence report and transmitting it to packet processing entities for processing. Hence, it only relates to the sharing and processing of cyber security data in a network, and does not utilize AI techniques for collective intelligence, AI signaling mechanisms, usage of blockchain network for information sharing, the mitigation of security threats, or disaster recovery.

The US patent US9591010B1, "Dual-Path Distributed Architecture for Network Security Analysis", describes a cloud-based platform for detecting network security anomalies and threats in distributed systems via security analytics, big data and machine learning in real-time or batch. It performs user and entity behavioral analytics. It visually presents analytical results that are scored with risk ratings and supporting evidence. However, it does not present AI signaling mechanisms for collective intelligence and does not leverage blockchain technology for information sharing.

The US patent US009392003B2, "Internet Security Cyber Threat Reporting System and Method", describes a risk assessment and managed security system for network users. It provides security services to keep a network safe from cyber threats, malware creations, and phishing attacks. It combines automated and human-driven solutions to establish an "always-on" position for anticipating, mitigating, discovering, and responding to incidents. The threat assessment is performed and the results are reported to the client system that is being monitored. A feature of the system is the ability to receive files in different formats, and/or export asset lists from leading IT asset products, allowing assets to be associated with the client computers described in an incident report. However, it does not present AI signaling mechanisms for collective intelligence and does not leverage blockchain technology for information sharing.

The US patent USOO9306965B1, "Cybersecurity System", describes an event processing system that produces scores, alerts, and mitigation actions in response to events. Sensors are used to receive and process data in order to create events, a distributed analytics platform is used to process events to create analytic workflows, and scoring engines are used to process events using analytic workflows to produce scoring engine messages. In addition, the system includes a real-time analytics engine to process scoring engine messages and distributed analytic platform messages in accordance with analytic workflows and event processing rules in order to form and transmit threat intelligence messages. In addition to broadcast messages, mitigation messages, and model updates are also included in threat intelligence messages. It contains logical segments that are associated with an analytic model, a set of analytic models, or an analytic workflow; one or more sources of inputs about activity within the logical segment, and a set of actions for mitigating the impact of anomalous activity within the logical segment. However, it does not present AI signaling mechanisms for collective intelligence and does not leverage blockchain technology for information sharing.

In the international patent application WO2017210770A1, "System and Methods for Smart Intrusion Detection Using Wireless Signals and Artificial Intelligence", describes an intelligent entrance detection system in which active off-the-shelf devices are used to automatically detect any authorized or unauthorized entry into an area of a residential (or small industrial) unit covered by a wireless network. Upon detection, an identification algorithm is employed to determine whether this entry is legal or illegal. Once this verification has been completed, either the routine smart home system is activated or a hazardous monitoring period begins in order to investigate the suspicious event further. During the hazardous monitoring period, if an illegal entrance is found to have been made into the property, the owner of the property is informed through a protocol for intruder alarms, if the entry was confirmed. All of the analytic and processing steps in this invention, including entrance detection, ownership identification, and device-free authority verification, are designed to be based on monitoring and quantification of changes in surrounding wireless signals caused by movements of people or objects within the sensing area. However, it does not present AI signaling mechanisms for collective intelligence and does not leverage blockchain technology for information sharing.

The US patent application USOO9443204B2, "Distributed Architecture for Machine Learning Based Computation Using a Decision Control Point", describes an ML and cloud-based distributed system that distributes tasks amongst the network nodes based on their capacity to perform the task. However, it does not present AI signaling mechanisms for collective intelligence and does not leverage blockchain technology for information sharing. It also does not provide mitigation methods of security threats or discuss disaster recovery.

Hence, none of the aforementioned works or patent applications study collective intelligence by AI signalling, distributed blacklisting via anomaly detection and blockchain network, the mitigation of security threats, or the disaster recovery.

### Summary

An architecture that enables collective intelligence for loT networks via smart network nodes and blockchain technology to mitigate malicious activities is presented with the invention. In this architecture, various security related functionalities are distributed to network nodes to detect tampered, captured and injected devices, recognize their movements and prevent networks use as an attack surface. Nodes interact with signaling and data traffic but also with artificial intelligence (Al) traffic and the blockchain to transfer security information to each node. The blockchain network allows for the authentication and governance of loT devices in a distributed, zero-trust environment in real-time. AI signaling helps distribute cyber-security functionalities across the loT network based on the device and/or application type by supporting the data transmission of network and device information suitable for all loT devices. Every node in the proposed loT network does not need to have all the cybersecurity functionalities, but the network as a whole has these functionalities.

The novelty and main functionalities of the invention:
- A secure and scalable blockchain-based architecture for enabling collective intelligence in distributed loT networks.
- The architecture is designed to meet the resource and power constraints of loT networks.
- The network collective intelligence is provided by loT clients and servers sharing information via the blockchain network and a new AI signaling protocol.
- The usage of blockchain technology allows the authentication and governance of loT devices in a distributed, zero-trust environment in real-time leveraging trust scoring and smart contracts.
- AI signaling helps distribute cyber-security functionalities across the loT network based on the device, user and/or application type by supporting the data transmission of network and device information and security functionalities suitable for all loT devices.

### Brief Description of the Figures

Figure 1 shows AI signaling in blockchain-fog network.
Figure 2 shows Al-blockchain node system architecture.

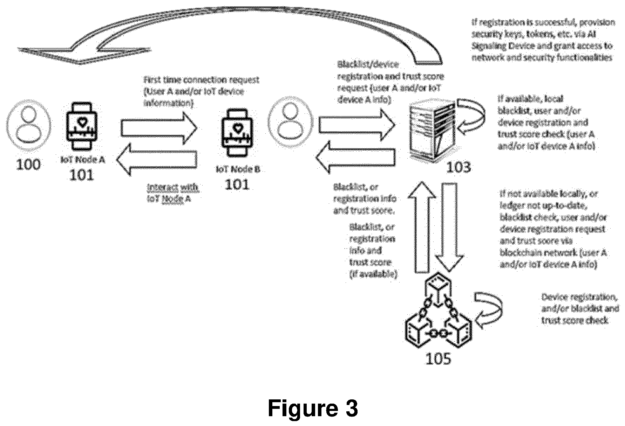

Figure 3 shows business flow of a first time connection/registration of an loT Node.

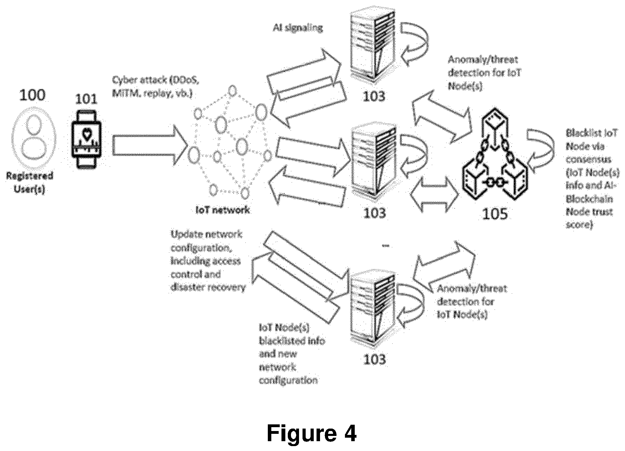

Figure 4 shows the blacklisting business flow.

### Part References

- 100.: User
- 101.: loT nodes
- 102.: Al-blockchain participant node
- 103.: Al-blockchain node
- 104.: Core network intelligent router
- 105.: Al-blockchain network
- 106.: Communications network
- 200.: Communications module
- 201.: Collective intelligence database
- 202.: User database
- 203.: Things database
- 204.: Disaster recovery database
- 205.: Blockchain participant database
- 206.: Memory
- 207.: Collective intelligence module
- 208.: Monitoring module
- 209.: Security, privacy and trust management module
- 210.: AI signaling device
- 211.: Detection module
- 212.: User management module
- 213.: Things management module
- 214.: Participant management module
- 215.: Blockchain and smart contracts module
- 216.: Rules engine
- 217.: Data analytics module
- 218.: Optimization module
- 219.: Processing module
- 220.: Verification module
- 221.: Transmitter device
- 222.: Receiver device
- 223.: Management module
- 224.: Disaster recovery module

### Detailed Description

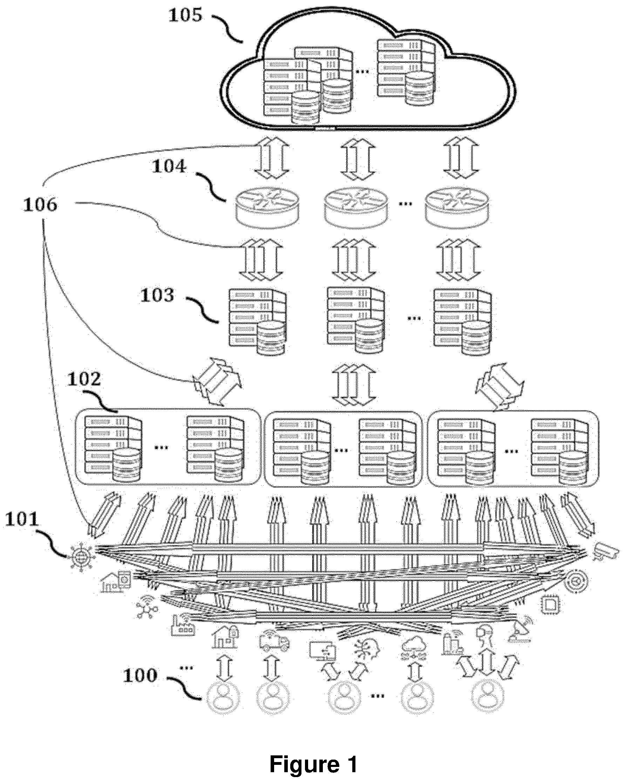

A secure, blockchain-based architecture is presented in the invention for enabling collective intelligence in distributed loT networks. In the proposed system, resource constrained nodes of a collectively intelligent distributed network, combine joint cyber security information and defend against cyber threats emerging outside the intelligent network. Intelligent security related computing, detection and prevention algorithms are distributed to network nodes. Nodes interact, as they normally do, with signaling and data traffic but also with AI traffic (see system architecture depicted in Figure 1). Signaling traffic of the external connections is not shown. Figure 1 shows signaling traffic of the loT network, such as routing table maintenance traffic with AI and data traffic respectively with arrows on the upper side while interaction between users (100) and loT nodes (101) shown with arrow at the bottom.

The AI traffic consists of information analyzed from received traffic, routing/topology information of the network, information received from threat and vulnerability databases, and information from security algorithms. Analysis of the traffic is performed in the fog computing nodes (Al-blockchain nodes (103)), edge computing nodes (Al-blockchain participants (102)), core network intelligent routers (104) and loT nodes (101).

The main components of the system architecture include:
- Al-blockchain network (105): Blockchain network and decentralized cloud data centers.
- Al-blockchain nodes (103): Fog computing nodes that act as blockchain nodes.
- Al-blockchain participant nodes (102): loT edge computing nodes that act as a blockchain participant.
- Communications network (106): Communication infrastructure/technologies supporting Al, data, and signaling traffic.
- Core network intelligent routers (104): Manages network traffic in the system.
- loT nodes (101)/smart things and user interfaces (Uls): The loT device owned by the user (100).
- Users (100): The end user that accesses the Al-blockchain node (103) via its UI.

Blockchain technology can be used to create distributed and decentralized trust frameworks. It is important to note, however, that consensus mechanisms consume a large amount of energy, which prevents it from performing at its maximum potential in a hybrid cloud-fog/edge service model. The concept of cloud mining, which encourages miners to lease or purchase resources from cloud providers, has been proposed as a possible solution to the contradictions [1]. To optimize the performance of blockchain applications based on cloud mining, game theory could be used to handle the interaction between cloud/fog/edge providers and miners [2]. Distributed and fast consensus could be achieved using the Alternating Direction Method of Multipliers (ADMM) Proof of Work (PoW) consensus algorithm [2], or other lightweight consensus algorithms such as Proof of Authority (PoA), Practical Byzantine Fault Tolerance (PBFT), Proof of Elapsed Time (PoET), etc.

The usage of loT and blockchain in conjunction with AI makes the system collectively intelligent and allows real-time decision-making. This facilitates the identification, prevention and mitigation of cyber-security threats, reduction of system failures, optimization of data flow, and provides re-routing options for disaster recovery.

IoT nodes (101), Al-blockchain participant nodes (102), and Al-blockchain nodes (103), core network intelligent routers (104) and communications network (106) include the functionalities of distributed cyber-security algorithms, the distribution of computation load, and AI signaling solutions.

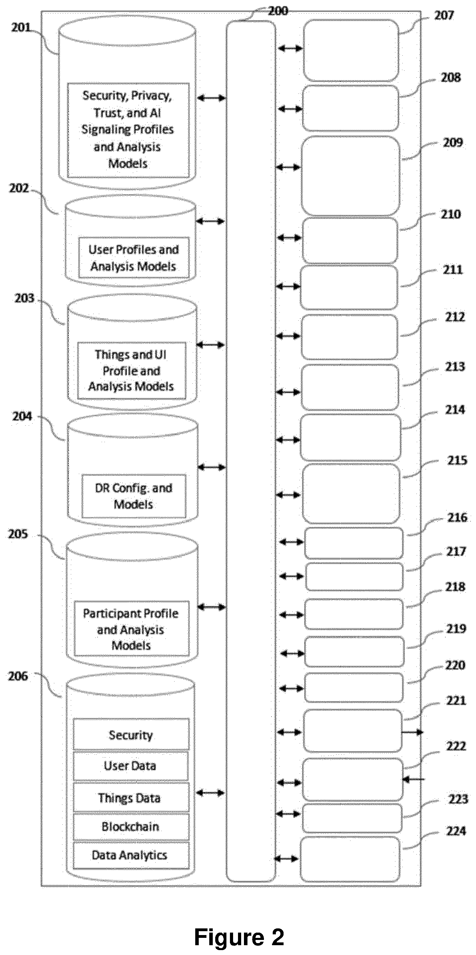

The system architecture of the Al-blockchain node (103) is depicted in Figure 2. Al-blockchain participant nodes (102) may contain the entirety or a subset of the functionalities of the Al-blockchain node (103).

A secure and scalable blockchain-based architecture for enabling collective intelligence in distributed loT networks is presented with the invention. The network collective intelligence is provided by loT clients and servers sharing information via the Al-blockchain network (105) and a new AI signaling protocol presented. The usage of blockchain technology allows the authentication and governance of loT devices in a distributed, zero-trust environment in real-time.

The AI information message exchange (Al signaling) protocol helps distribute cyber-security functionalities across the loT network based on the device, user (100) and/or application type. It enables to use distributed constrained computing resources and to distribute security information to/from loT nodes (101) to/from edge/fog nodes, cloud and other relevant devices. Cloud servers, fog nodes, edge nodes, and loT nodes (101) can defend collectively against malicious actions and get collectively awareness of the prevailing security state of the system. The collective intelligence will also leverage on publicly available security information such as threat intelligence. The AI signaling device (210) manages the distribution and the secure provisioning of AI functionalities and their authentication across the network, including secure firmware upgrades and boots, and secure storage mechanisms in the scope of large scale and massive mesh networks containing relatively resource-constrained nodes. The AI signaling device (210) manages AI signaling based on device type, application type, user type, communications protocol, communications speed, battery level, computational load, prevailing security state of the system, etc.

Distributed blacklisting and trust scoring of Al-blockchain nodes (103) is used for the authentication, authorization and governance of loT nodes (101), Al-blockchain participants (102) and Al-blockchain nodes (103) in the network. Distributed blacklisting is based on the extension of our previous work in Tarlan et al. (2022) and Baykara et al. (2021). The system architecture and business flows are improved by adding the scenario of a new node directly interacting with a neighboring client, which acts as a relay for registration. Additionally, we introduce trust scoring of network participants, and AI signaling between loT nodes (101), Al-blockchain participant nodes (102) and Al-blockchain nodes (103) for enhancing the network security.

An loT node (101) first time connection attempt is summarized as follows:
- A user (100) uses the user interface of an loT node (101) to request to connect to a registered, neighboring loT node (101) for the first time. User (101) and/or loT device (101) related information is sent to the neighboring node (101).
- The registered, neighboring loT node (101) connects to the Al-blockchain participant node (102) via the communications network (106). The loT node (101) itself can be an Al-blockchain participant node (102). In that case, this step is omitted.
- The Al-blockchain participant node (102) checks whether the loT node (101) is registered, blacklisted and if its trust score is available by connecting to the Al-blockchain node (103) via the communications network (106) by sending the received user (100) and/or loT device (101) information.
- The Al-blockchain node (103) checks the user (100) and/or loT device (101) information against the blacklist either locally or via the Al-blockchain network (105).
   ∘ If the user (100) and/or loT device (101) is blacklisted, the Al-blockchain node (103) responds to the Al-blockchain participant node (102) with the user (100) and/or device (101) blacklist information.
   ∘ If the user (100) and/or loT device (101) is not blacklisted, it checks whether the user (100) and/or loT device (101) is registered.
      ▪ If the user (100) and/or loT device (101) is registered, the Al-blockchain node (103) sends a response to the Al-blockchain participant node (102) with the user (100), and/or device (101) registration and, if available, its trust score information.
      ▪ If the user (100) and/or loT device (101) is not registered, the Al-blockchain node (103) initiates the user (100) and/or device (101) registration via the Al-blockchain network (105). It performs secure provisioning of AI functionalities and their authentication, secure firmware upgrade and boot, and secure storage mechanisms to the newly registered device via the AI signaling device (210).
- The Al-blockchain participant (102) responds to the loT node (101) with the blacklist or registration result.
   ∘ If the user (100) and/or device (101) is blacklisted, the user/device is not allowed access to the loT node (101).
   ∘ If the user (100) and/or device (101) is not blacklisted, the newly registered user/device is provided access to the loT node (101) and network.

The blacklisting process of a system component and updating of system configuration is provided below.
- System components including loT nodes (101), Al-blockchain participant nodes (102), Al-blockchain nodes (103) transmit network traffic data, device data, feedback data, ML models, network topology/routing data, security updates, firmware version, data storage security mechanism, etc. to the Al-blockchain node (103) via AI signaling. Feedback data could include information about the quality of service (responsiveness, latency, uptime, etc.) of the relevant device, distance from or geolocation of the sending device, etc. Feedback data is used in establishing the trust score of the device receiving the feedback, together with the trust score of the sending device via smart contracts.
- The Al-blockchain node (103) receives the data and processes it as follows:
   ∘ If network traffic data and/or device information is received, the Al-blockchain node (103) performs security and privacy checks including anomaly detection, data security and privacy compliance. If an anomaly, security, or privacy threat is detected, it requests to blacklist the relevant system component to the Al-blockchain network (105) by adding a new block.
   ∘ If feedback data is received, the data is used in updating the relevant components (Al-blockchain node (103), Al-blockchain participant node (102), loT node (101), etc.) trust score in its smart contract via the blockchain and smart contracts module (215).
   ∘ If ML models (of loT node (101), user, Al-blockchain node (103), or Al-blockchain participant node (102)) are received, this information is used in updating the relevant ML model (trust score, user profile, device profile, etc.) via the Al-blockchain network (105). The model is used for updating models used by the security, privacy and trust module (209) and/or data analytics module (217).
   ∘ If network topology/routing information is received, the disaster recovery plan is updated via the disaster recovery module (224). Network routing table and load balancing configuration is updated via the optimization module (218).
   ∘ If updated device security information (firmware updates, changes to data storage security mechanisms, etc.) is received, the relevant action is taken by AI signaling device (210).
      ▪ If a downgrade of device security is detected, previously provisioned encryption keys, payment tokens, etc. may be deleted or suspended from the device via the AI signaling device (210) and/or digital certificates and access rights may be revoked by the Al-blockchain node (103), which is propagated to the loT network and Al-blockchain network (105).
      ▪ If it is detected that the device has an upgraded security feature, relevant keys and/or tokens may be provisioned via the AI signaling device (210) and the Al-Blockchain node (103) may grant access to relevant network nodes and/or security functionalities for threat detection, prevention, and mitigation, as well as network routing, load balancing and disaster recovery.
- The trust score of the Al-blockchain node (103) is used to assess the trustworthiness of blacklist request. The Al-blockchain nodes (103) trust score comprises feedback received from loT nodes (101), and/or Al-blockchain participant nodes (102), including their trust scores. If the Al-blockchain node (103) is deemed as trustworthy, the blacklist request is confirmed via a consensus of Al-blockchain nodes (103), and the relevant system component is blacklisted.
- The entire network revokes digital certificates, smart contracts, and access of the blacklisted system component to the network and updates the networks security, routing, load balancing and disaster recovery configuration. All security keys, tokens, etc. are remotely deleted from the system component via the AI signaling device (210).

Collective intelligence database (201) stores all data related to a collective intelligence module (207), including security, privacy, trust, and AI signaling profiles and analysis models. The collective intelligence module (207) defines prevailing security state of the system, manages the distribution of intelligence, computational load, and systems functionalities in the network and works together with AI signaling device (210) in AI traffic transfer functionalities, i.e., it is an overlay network solution.

User database (202) stores all data related to the users (100), including user profiles and analysis models while user management module (212) is managing all users in the system and working together with the verification module (220) for user identification. The verification module (220) performs all verification functionalities in the system including data verification, request verification, user identity, participant or device verification. Data verification includes data gathering, integration, verification, storing, provisioning, and presentation.

Things database (203) stores all data related to the Al-blockchain nodes (103), including things profiles and analysis models. On the other side, things management module (213) manages all things in the system and works together with the verification module (220) for device identification.

Disaster recovery database (204) stores all data related to disaster recovery, including disaster recovery configuration and analysis models. Disaster recovery system (224) assesses the security characteristics of the system together with the security module (209) and prepares the network for disaster recovery by updating disaster recovery configuration and models. It uses re-routing options obtained from the optimization module (218) to perform disaster recovery when a system or service failure occurs.

Blockchain participant database (205) stores all data related to the AI blockchain participant nodes (102), including participant profiles and analysis models. Blockchain and smart contracts module (215) manages all blockchain related activities, including the validation/registration of user/device, checking of user/device against the blacklist, requesting to blacklist a user/device, initiating the process of revoking user/device access rights to the network of a blacklisted user/device, managing the secure transfer of data via data signing and transmission protection mechanisms. Blockchain and smart contracts module (215) uses a blockchain consensus protocol suitable for the loT devices (101) and Al-signaling.

Memory (206) stores data related to activities performed in the system, including security, user (100), things, participant, blockchain, and data analytics.

Monitoring module (208) continuously monitors the system. The module (208) includes multipoint (sensors distributed) online traffic monitoring in communications network (106), loT nodes (101), Al-blockchain participants (102), and Al-blockchain nodes (103) and shares findings with the detection module (211). The detection module (211) performs all detection activities in the system including signal, user/device detection, the identification and mitigation of cyber-security threats, events and incidents.

Security, privacy and trust management module (209) performs all security, privacy and trust management activities in the system including anomaly detection, trust scoring and privacy preservation. The module (209) works together with the detection module (211) for distributed threat, event and incident detection. Also works together with the blockchain and smart contracts module (215) for user/device blacklist management and smart contract management.

AI signaling device (210) provisions all security keys, tokens, digital certificates, etc. to system components. It also manages the distribution of and access to security functionalities for threat detection, prevention and mitigation across the loT network.

Participant management module (214) manages all Al-blockchain participant nodes (102) in the system and works together with the verification module (220) for participant identification.

Rules engine (216) applies rules and policies applicable to user, things, participants and network based on the configuration provided by the management module (223), security module (209) and disaster recovery module (224). The management module (223) is used in managing the entire system, e.g., by a network administrator via a user interface, including network configuration, network access rights, etc.

Data analytics module (217) performs all data analytics activities in the system, including for anomaly detection, user/things/participant model generation and analysis. The module (217) works together with the collective intelligence module (207), detection module (211), security module (209) and optimization module (218). The optimization module (218) optimizes data flow in the network via a network routing table and load-balancing configuration. The model (218) also provides re-routing options for disaster recovery to the disaster recovery module based on network configuration and Al-signaling information obtained from the AI signaling module.

Processing module (219) performs all processing activities in the system, including data processing, image processing, etc.

Transmitter device (221) and receiver device (222) are devices (e.g., NFC/RFID reader, API gateway, loT gateway, network router, switch, etc.) that transmit data to external systems and receives external signals sent to the system respectively.

The usage of loT and blockchain in conjunction with AI makes the system collectively intelligent and allows real-time decision-making. The identification and mitigation of cyber-security threats, reduction of system failures, optimization of data flow, and provides re-routing options for disaster recovery is achieved with the following steps:
- Register loT devices in the loT network by issuing digital certificates, generating smart contracts, provisioning security keys, tokens, etc. and granting access to the network.
- Collect data from loT devices.
- Detect loT network cyber-security threats based on the collected data from loT nodes and publish security incidents to the blockchain.
- Take collective action on detected security threats, e.g., by blacklisting and removing malicious loT devices from the network, applying load balancing rules to divide network traffic on different routes, retrieving back-up data and re-routing the data flow for mitigating cyber-security attacks and performing disaster recovery.

### References

[1] W. Li, J. Wu, J. Cao, N. Chen, Q. Zhang and R. Buyya, "Blockchain-based trust management in cloud computing systems: a taxonomy, review and future directions", Journal of Cloud Computing: Advances, Systems and Applications, Vol. 10, No. 35, 2021.
[2] Xiong Z, Kang J, Niyato D, Wang P, Poor HV, "Cloud/edge computing Service Management in Blockchain Networks: multi-leader multi-follower game-based ADMM for pricing", IEEE Transactions on Services Computing, Vol. 13, No. 2, pp. 356-367, 2020.
[3] "State of the iot 2020: 12 billion iot connections, surpassing non-iot for the first time," https://iot-analytics.com/state-ofthe-iot-2020-12-billion-iot-connections-surpassing-non-iotfor-the-first-time/, 2022, accessed: 2022-09-07.
[4] "Cisco iot solutions," https://www.cisco.com/c/en/us/solutions/internet-of-things/overview.html, 2022, accessed: 2022-09-07.
[5] "Forecast end-user spending on iot solutions worldwide from 2017 to 2025," https://www.statista.com/statistics/976313/global-iot-market-size/, 2022, accessed: 2022-09-07.
[6] N. Mohamudally, "Paving the way towards collective intelligence at the iot edge," Procedia Computer Science, vol. 203, pp. 8-15, 2022, 17th International Conference on Future Networks and Communications / 19th International Conference on Mobile Systems and Pervasive Computing / 12th International Conference on Sustainable Energy Information Technology (FNC/MobiSPC/SEIT 2022), August 9-11, 2022, Niagara Falls, Ontario, Canada.
[7] M. A. Khan and K. Salah, "lot security: Review, blockchain solutions, and open challenges," Future Generation Computer Systems, vol. 82, pp. 395-411, 2018.
[8] O. Tarlan, I. 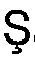 afak, and K. Kalkan, "DiBLIoT: A Distributed Blacklisting Protocol for loT Device Classification Using the Hashgraph Consensus Algorithm," in The 36th International Conference on Information Networking (ICOIN) 2022", Jeju Island, Korea, January 2022.
[9] C. A. Baykara, I. 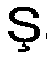 afak, and K. Kalkan, "SHAPEIOT: Secure Handshake Protocol For Autonomous loT Device Discovery and Blacklisting Using Physical Unclonable Functions and Machine Learning," in 13th International Conference on Network and Communications Security (NCS 2021)", Toronto, Canada, September 2021.
[10] P. Radanliev, D. D. Roure, K. Page, J. Nurse, R. M. Montalvo, O. S. O., L. Maddox, and P. Burnap, "Cyber risk at the edge: current and future trends on cyber risk analytics and artificial intelligence in the industrial internet of things and industry 4.0 supply chains," Cybersecurity, Springer Nature, vol. 3, 2020.
[11] A. O. Joseph, J. Raffety, P. Morrow, L. Zhiwei, C. Nugent, S. McClean, and G. Ducatel, "Securing self-organizing iot ecosystem: A distributed ledger technology approach," in 2019 IEEE 5th World Forum on Internet of Things (WFloT), 2019, pp. 809-814.
[12] L. Konstantinos, C. Bora, P. Alexandros, S. Basile, V. Franck, S. Christos, C. Stelios, K. Bill, M. Antonis, T. George, C. Andrea, A. Harris, and B. George, "Cognition enabled iot platform for industrial iot safety, security and privacy - the chariot project," in 2019 IEEE 24th International Workshop on Computer Aided Modeling and Design of Communication Links and Networks (CAMAD), 09 2019, pp. 1-4.
[13] Y. An, Y. He, F. R. Yu, J. Li, J. Chen, and V. C. Leung, "An http anomaly detection architecture based on the internet of intelligence," IEEE Transactions on Cognitive Communications and Networking, pp. 1-1, 2022.
[14] M. Li, F. R. Yu, P. Si, Y. Zhang, and Y. Qian, "intelligent resource optimization for blockchain-enabled iot in 6g via collective reinforcement learning," IEEE Network, pp. 1-19, 2022.

## Claims

1. A computer implemented method of using loT and blockchain in conjunction with AI to make a system collectively intelligent and allow real-time decision-making, comprising:
• registering loT nodes (101) in an loT network by issuing digital certificates, generating smart contracts, provisioning security keys, and tokens and granting access to the network,
• collecting data from loT nodes (101),
• detecting the loT network cyber-security threats based on the collected data from loT nodes (101) and publishing security incidents to the Al-blockchain network (105),
• taking collective action on detected security threats, applying load balancing rules to divide network traffic on different routes, retrieving back-up data and re-routing the data flow for mitigating cyber-security attacks and performing disaster recovery.

2. The method according to claim 1, comprising the steps of checking connection request of a user (100):
• requesting to connect to a registered, neighboring loT node (101) for the first time using a user interface of an loT device,
• checking by an Al-blockchain participant node (102) whether the loT node (101) is registered, blacklisted and if its trust score is available by connecting to an Al-blockchain node (103) via a communications network (106) by sending received user (100) and/or loT device information,
• checking the user (100) and/or loT device information against blacklist or registration either locally or via an Al-blockchain network (105),
• responding to the loT node (101) with the blacklist or registration result by the Al-blockchain node (103),
∘ if the user (100) and/or device is blacklisted, the user/device is not allowed access to the loT node (101).
∘ if the user (100) and/or device is not blacklisted, the newly registered user/device is provided access to the loT node (101) and network.

3. The method according to claim 2, wherein checking the user (100) and/or loT device information against blacklist or registration either locally or via an Al-blockchain network (105), comprising steps of:
• if the user (100) and/or loT device is blacklisted, the Al-blockchain node (103) responds to the Al-blockchain participant node (102) with the user (100) and/or device blacklist information,
• if the user (100) and/or loT device is not blacklisted, the Al-blockchain node (103) checks whether the user (100) and/or loT device is registered,
∘ if the user (100) and/or loT device is registered, the Al-blockchain node (103) sends a response to the Al-blockchain participant node (102) with the user (100), and/or device registration and, if available, its trust score information,
∘ if the user (100) and/or loT device is not registered, the Al-blockchain node (103) initiates the user (100) and/or device registration via the Al-blockchain network (105).

4. The method according to claim 1, comprising the steps of blacklisting process of a system component and updating system configuration:
• receiving transmitted network traffic data, device data, feedback data, ML models, network topology/routing data, security updates, firmware version, and data storage security mechanism of system components including loT nodes (101), Al-blockchain participant nodes (102), and Al-blockchain nodes (103) via AI signaling,
• receiving and processing data via the Al-blockchain node (103);
∘ if network traffic data and/or device information is received, the Al-blockchain node (103) performs security and privacy checks including anomaly detection, data security and privacy compliance and if an anomaly, security, or privacy threat is detected, it requests to blacklist the relevant system component to the blockchain network,
∘ if feedback data is received, the data is used in updating the relevant components' trust score in its smart contract via a blockchain and smart contracts module (215),
∘ if ML models of the system components or user (100) are received, received information is used in updating the relevant ML model via the Al-blockchain network (105),
∘ if network topology/routing information is received, disaster recovery plan is updated via a disaster recovery module (224) and network routing table and load balancing configuration is updated via an optimization module (218),
∘ if updated device security information is received, relevant action is taken by an AI signaling device (210):
▪ if a downgrade of device security is detected, previously provisioned keys and tokens may be deleted or suspended from the device via the AI signaling device (210) and/or digital certificates and access rights may be revoked by the Al-blockchain node (103), which is propagated to the loT network and Al-blockchain network (105).
▪ if it is detected that the device has an upgraded security feature, relevant keys and tokens may be provisioned via the AI signaling device (210) and the Al-blockchain node (103) may grant access to relevant network nodes and security functionalities for threat detection, prevention, and mitigation, as well as network routing, load balancing and disaster recovery.
• assessing trustworthiness of blacklist request using trust score of the Al-blockchain node (103), wherein the trust score comprises feedback received from loT nodes (101), and/or Al-blockchain participant nodes (102), including their trust scores,
• revoking digital certificates, smart contracts, and access of the blacklisted system component to the network and updating the networks security, routing, load balancing and disaster recovery configuration.

## Amended claims

### Amended claims in accordance with Rule 137(2) EPC.

1. A computer implemented method of using Internet of Things-loT and Artificial Intelligence-AI blockchain to make a system collectively intelligent and allow real-time decision-making, **characterized by** comprising:
• registering the loT nodes (101) in a distributed loT network by issuing digital certificates, generating smart contracts, provisioning security keys, and tokens and granting access to the loT network,
• collecting data from the loT nodes (101),
• detecting the loT network cyber-security threats based on the collected data from the loT nodes (101) and publishing security incidents to the Al-blockchain network (105),
• taking collective action on the detected security threats, applying load balancing rules to divide network traffic on different routes, retrieving back-up data and re-routing a data flow for mitigating cyber-security attacks and performing disaster recovery.

2. The method according to claim 1, and **characterized by** comprising the steps of checking connection request of a user (100):
• requesting to connect to a registered, neighboring loT node (101) for the first time using a user interface of an loT device,
• checking by an Al-blockchain participant node (102) whether the loT node (101) is registered, blacklisted and if its trust score is available by connecting to an Al-blockchain node (103) via a communications network (106) by sending received user (100) and/or loT device information,
• checking the user (100) and/or loT device information against blacklist or registration either locally or via an Al-blockchain network (105),
• responding to the loT node (101) with the blacklist or registration result by the Al-blockchain node (103),
∘ if the user (100) and/or device is blacklisted, the user/device is not allowed access to the loT node (101).
∘ if the user (100) and/or device is not blacklisted, the newly registered user/device is provided access to the loT node (101) and network.

3. The method according to claim 2, wherein checking the user (100) and/or loT device information against blacklist or registration either locally or via an Al-blockchain network (105), comprising steps of:
• if the user (100) and/or loT device is blacklisted, the Al-blockchain node (103) responds to the Al-blockchain participant node (102) with the user (100) and/or device blacklist information,
• if the user (100) and/or loT device is not blacklisted, the Al-blockchain node (103) checks whether the user (100) and/or loT device is registered,
∘ if the user (100) and/or loT device is registered, the Al-blockchain node (103) sends a response to the Al-blockchain participant node (102) with the user (100), and/or device registration and, if available, its trust score information,
∘ if the user (100) and/or loT device is not registered, the Al-blockchain node (103) initiates the user (100) and/or device registration via the Al-blockchain network (105).

4. The method according to claim 1, and **characterized by** comprising the steps of blacklisting process of a system component and updating system configuration:
• receiving transmitted network traffic data, device data, feedback data, ML models, network topology/routing data, security updates, firmware version, and data storage security mechanism of system components including the loT nodes (101), Al-blockchain participant nodes (102), and Al-blockchain nodes (103) via AI signaling,
• receiving and processing data via the Al-blockchain node (103);
∘ if network traffic data and/or device information is received, the Al-blockchain node (103) performs security and privacy checks including anomaly detection, data security and privacy compliance and if an anomaly, security, or privacy threat is detected, it requests to blacklist the relevant system component to the blockchain network,
∘ if feedback data is received, the data is used in updating the relevant components' trust score in its smart contract via a blockchain and smart contracts module (215),
∘ if ML models of the system components or user (100) are received, received information is used in updating the relevant ML model via the Al-blockchain network (105),
∘ if network topology/routing information is received, disaster recovery plan is updated via a disaster recovery module (224) and network routing table and load balancing configuration is updated via an optimization module (218),
∘ if updated device security information is received, relevant action is taken by an AI signaling device (210):
▪ if a downgrade of device security is detected, previously provisioned keys and tokens may be deleted or suspended from the device via the AI signaling device (210) and/or digital certificates and access rights may be revoked by the Al-blockchain node (103), which is propagated to the loT network and Al-blockchain network (105).
▪ if it is detected that the device has an upgraded security feature, relevant keys and tokens may be provisioned via the AI signaling device (210) and the Al-blockchain node (103) may grant access to relevant network nodes and security functionalities for threat detection, prevention, and mitigation, as well as network routing, load balancing and disaster recovery.
• assessing trustworthiness of blacklist request using trust score of the Al-blockchain node (103), wherein the trust score comprises feedback received from the loT nodes (101), and/or Al-blockchain participant nodes (102), including their trust scores,
• revoking digital certificates, smart contracts, and access of the blacklisted system component to the network and updating the networks security, routing, load balancing and disaster recovery configuration.
